# EUROPEAN PATENT SPECIFICATION

(11) **EP 4 445 602 B1**
(45) Date of publication and mention of the grant of the patent: **29.10.2025**
(21) Application number: 21823228.8
(22) Date of filing: 27.11.2021
(51) Int. Cl.: H04L 69/16, H04L 69/22, H04L 69/325, G06F 16/36, G06F 40/295, G06F 40/157

(54) **DISTRIBUTED ARCHITECTURE FOR BIG DATA QUERY PROCESSING AND SUBSEQUENT REPRESENTATION OF THE QUERY RESULT**
VERTEILTE ARCHITEKTUR FÜR DIE VERARBEITUNG VON BIG-DATA-ABFRAGEN UND DIE ANSCHLIESSENDE DARSTELLUNG DES ABFRAGEERGEBNISSES
ARCHITECTURE DISTRIBUÉE POUR LE TRAITEMENT DES REQUÊTES DE BIG DATA ET LA REPRÉSENTATION ULTÉRIEURE DU RÉSULTAT DE LA REQUÊTE

(43) Date of publication of application: 16.10.2024
(73) Proprietor: ZOE Life Technologies AG, 9100 Herisau (CH)
(72) Inventor: POLLERT, Heiner, 80331 München (DE); SCHLOER, Hardy, 80331 München (DE)
(74) Representative: Reich, Jochen
(86) International application number: PCT/EP2021/083256
(87) International publication number: WO 2023/094003

(56) References cited:
- US-A1- 2009 287 642
- US-A1- 2012 290 988
- YANG GAO ET AL: "A Two-Stage Approach for Generating Topic Models", 14 April 2013, ADVANCES IN KNOWLEDGE DISCOVERY AND DATA MINING, SPRINGER BERLIN HEIDELBERG, BERLIN, HEIDELBERG, PAGE(S) 221 - 232, ISBN: 978-3-642-37455-5, XP047027505

## Description

The present invention is directed towards a method and an apparatus for automated and hardware efficient addressing of machines with automated analysis of instructions, which are transmitted to the machine in IPv6 datagrams. The present invention provides the advantage that even big data sets can be represented in an efficient way such that the complexity is broken down and a variety of parameters are compressed such that a comprehensive representation of huge data amounts is possible. With an increasing availability of data algorithms computer systems typically lack the ability to process and represent huge data sets in real time. In response to this the present inventions suggests and efficient and yet appropriate way for coding and transmitting the large data sets on limited hardware devices. The invention is furthermore directed towards a respectively arranged system along with a computer program product and a computer-readable medium.

EP 1 714 445 B1 shows communication systems, and more particularly configuring addresses in a packet switched communication system for communication network elements, such as telecommunication equipment.

EP 2 751 955 B1 shows a resource manager, system, and method for communicating resource management information for smart energy and media resources using IPv6.

The Internet Protocol version 6, IPv6 for short, is commonly known in the art and is used for addressing web sites, hosts, servers and in general internet resources. More sophisticated approaches address machines such as robots or technical devices from the domain of the internet of things. In general IPv6 addresses are represented as eight groups, separated by colons, of four hexadecimal digits. IPv6 provides an Internet Layer protocol for packet-switched internetworking and moreover provides end-to-end datagram transmission across multiple IP networks.

WO 2019/ 086 638 A1 shows a method for building computing machinery out of multiple separate networked components, wherein the method of assigning addresses to individual network nodes is designed to make improbable, to any required degree of certainty, the possibility that one node in the network or subnetwork has the same address as another node in the network or subnetwork, and for communicating messages to and from such nodes with assigned addresses to other and possibly different nodes with possibly different addresses in said computer network. The multiple separate network nodes are capable of computing functions on the data sent to them, and of responding with the data resulting from said computations or transmitting such results to other nodes in the network. Collectively a system of such nodes implements a finite general purpose Turing machine.

WO 2020/ 079 014 A1 shows representations of physical objects in text, stores them in a particular type of database, and allows simplified retrieval and abstraction of said physical objects. The simplified retrieval and abstraction facilitates the drawing of inferences regarding properties and behavior of a particular object from consideration of other properties and behaviors of that object and from references to that object and associations related to that object.

US 2009/0287642 A1 shows technologies for providing automated analysis and summarization of free-form comments in survey response data. A number of topic words are identified from the survey response comments, and a numeric weight is calculated for each topic word that reflects the relevance of the topic word to each comment. Each topic word is associated with one or more topics and the comments relevant to each topic is then determined based on the weights of the associated topic words in each comment. A report is generated which summarizes the topics and their relative importance in the survey response comments based upon the number of comments relevant to each.

The prior art distinguishes between header information and payload information. This may result in problems as network devices handle these information types differently. At least an alternative solution is required to configure end devices. Typically the potential of IPv6 is not fully exploited as for instance the extension headers can carry also unintended information.

According to the known art it is a drawback that instructions need to be created manually and are to be transmitted according to known techniques. This is labor intense and moreover prone to errors.

Consequently, it is an object of the present invention to provide a method for automated and hardware efficient representation of big data sets. Moreover, it is an object of the present invention to provide a respectively arranged system arrangement being implemented in accordance with the suggested method. Moreover, it is an object of the present invention to provide a respectively arranged computer program product and a computer-readable medium.

The object is solved by the subject-matter according to claim 1.

Accordingly, a method for automated and hardware efficient representation of big data stets is suggested, comprising the steps of providing a glossary of words in at least one data storage, wherein to each of the words contained in the glossary a technical mood is assigned, and formulating a query containing at least a selection of the words in the glossary; providing an empirical data source, in which a number of appearing words out of the query is counted; and storing the number of appearance of the words in a header of an IPv6 datagram; and transmitting the IPv6 datagram to a machine device for its configuration based on header information.

The present invention develops technical aspects of the application domains of IPv6 further in the direction of addressing hardware and providing specific hardware configurations. It has been surprisingly found out that IPv6 provides several technical advantages over the prior art when addressing and configuring machines as the concepts can largely contribute to an advanced addressing of machines over the network as the IPv6 addresses can be distributed over existing networks at great speeds and moreover very reliable.

Moreover, IPv6 provides technical advantages over previous versions such as IPv4 for instance when it comes to coding information. The present invention aims at configuration of hardware modules in a unique way such that each component can individually be addressed, not over a broadcast, which is of such efficiency regarding latency that the addressing of components can be performed at real time. Hence, hardware being security relevant is addressed almost immediately surprisingly making real time applications possible such as autonomous driving or precise control of manufacturing robots.

The protocol used for the underlying scenario is more efficient due to some design specifications for instance the size of packages may be reduces by leaving out optional header fields. The present invention enhances the scope of known protocol such that huge amounts of machine readable languages can be processed and communicated over a network.

The present invention makes use of the data fields in IPv6 that are unused and can therefore code additional payload information. For instance the IPv6 format holds so called extension headers that may hold optional information. In case this optional information is not used it can be used for the purposes of the present invention and code payload data as currently suggested. The data can be coded in the header fields and/ or even in the address fields in case not the full address range is required to address a specific receiver. As previous versions such as IPv4 required less blocks it was found out that not the full excessive range of IPv6 is required but even in the address blocks payload can be coded. Once the receiver recognizes the semantics of the address fields they can code both address and payload data. In this way payload can be transmitted in packages that are to be sent anyway and hence less bandwidth is required. The coding of information in the IPv6 headers provides an alternative solution compared to the coding in the payload sections and provides network specific advantages as the IPv6 packets are handled differently by network components.

IPv6 addresses are identifiers for single or multiple interfaces for end devices. Different treatment results from the three types of addresses. A unicast address is an identifier for a single interface. A data packet sent to the unicast address is delivered to the interface marked with this identifier. Anycast addresses are identifiers for a number of interfaces belonging to different devices. A data packet sent to an anycast address is delivered to an interface marked with this identifier. Multicast addresses identify a number of interfaces that belong to different devices. A data packet sent to a multicast address is sent to all interfaces with this identifier. Thus, there are differences in the treatment of the encodings, whether they are now sent as IPv6 signal data or as user data. This has been recognized by the present invention and accordingly encodes data in the IPv6 format. One of the contributions is that the payload data is coded in the IPv6 header instead of the payload section.

Another technical advantage of the present invention is that information can be hidden in the IPv6 datagram. As information can be coded in the header or extensions headers a fraudulent user does not expect information to be coded here but rather expects signaling data rather than payload data.

The suggested method can be performed automated as no further input is required from an operator. The only fact to be provided is the query input through the user. Moreover, the suggested method is hardware efficient on both sides namely the computation of the empirical data sets as well as the presentation of the resulting diagram to the user. One aspect of hardware efficiency is the fact that the user can operate a commonly known computer screen and is still presented the major extract of big data sets. In this way the user is able to analyze big data sets in real time without requiring specific hardware devices.

In a preliminary step providing a glossary of words is performed by means of at least one data storage. This refers to the fact that the glossary can be distributed over a heterogeneous environment and several data storages may be provided to store the glossary. In general the present invention does not only address words but may still compute any data object, whatsoever. For instance, an image can be analyzed by pattern matching and accordingly, the shown objects are extracted and are named by a word. The same holds through for audio files, which can be analyzed by pattern matching or voice recognition. Hence, preliminary steps may extract words from any data source.

Each of the words contained in the glossary has at least one technical mood assigned meaning that each word holds at least one technical parameter. In general a mood is a specific semantic being expressed by the underlying empirical data source. Consequently, the notion of a technical mood can be replaced by a technical parameter. The technical parameter indicates a specific perception of the query in their underlying empirical data source.

For instance, an empirical data source is provided such as the internet and a user formulates a query containing at least a selection of the words in the glossary. It may be the case that the user queries the underlying method for the notion "virus". In general a virus infiltrating a computer system is something bad as malware may destroy underlying data structures. Consequently, the notion of "virus" may be assigned the technical mood of "conflict".

The empirical data structure is analyzed and accordingly, a number of appearing words out of the query is counted. For instance, the empirical data source may comprise the wording "virus" a specific number of times. As the word "virus" is connected with the technical mood "conflict", the number of occurrences of the word "virus" is the same as the number of the importance of the technical mood "conflict".

It may likewise be the case that the word "virus" is likewise connected with the technical mood of "action". A malware on a computer typically triggers a specific action by the user. Accordingly, the number of occurrences of the word "virus" likewise increases the number of occurrences of "action".

Hence, an indicator can be calculated which represents the predefined technical moods. For each word being defined in the glossary and being present in the empirical data source the respective counter is increased. In this way the empirical data source can be evaluated regarding specific technical moods.

A further word may be "programming" which may be assigned the technical mood of "action" but not the technical mood of "conflict". Hence, at each occurrence of the notion "programming" the mood of "action" is increased but not the technical mood of "conflict". Hence, specific moods can be extracted from the empirical data source.

Once these numbers are available the indicators can be arranged in a circular diagram. The diagram then reflects the overall technical moods being comprised in the empirical data source. Hence, the indicator may be placed where the specific section for "action" is located and likewise further measurements may be applied such as a distance from the center, also referred to as radius, or a circumference also effecting the size of the section. In this way the indicator can represent specific moods and by the size of the indicator it can represent the importance of the mood being related to the number of occurrence of the specific mood. Summarizing this and providing an example the indicator may be placed in the section referring to the technical mood "action" at a big size indicating the very importance of the respective mood within the empirical data source.

Summarizing the above an efficient algorithm is provided which allows the system to break down big data sets and still represent such data in an efficient way. Moreover, the underlying hardware can be used efficiently as merely a two-dimensional diagram is provided after all. This means that no highly performing computer hardware is required but even large data sets can be broken down to a circular diagram. Such a circular diagram can be represented on typically known hardware devices.

The output is so efficient that even a mobile computing system, such as a smartphone can be used for data presentation. Moreover, the computation of the indicators can be performed on a distributed hardware environment such that the only step to be performed on the user end device is the representation of the data. In this way the processing of the bit data sets can be deployed on a highly performing server while the representation can be performed on a normal user end device.

The number of appearance can be stored in the address block or the extension headers of an IPv6 datagram. Both the sender and the receiver shall agree on the underlying format in order to be able to interpret the provided data.

According to an aspect of the present invention the number of appearance is stored in an extension header or at least one address block of the datagram. This provides the advantage that the information can be coded in optional data fields and can hence be transmitted with the IPv6 datagram. As indicated above the IPv6 packages may be treated differently by network components and hence an alternative way of representing and transmitting data is suggested.

According to a further aspect of the present invention the number of appearance provides configuration parameters for the machine device. This provides the advantage that the device can be configured using IPv6 datagrams. The payload can be used and moreover data specified in the hexa decimal system is used. This offers a wide range for additional provision of data.

According to a further aspect of the present invention a database is provided indicating further processing information about the number of appearance. This provides the advantage that the receiver obtains information on how to handle and interpret the received data.

According to a further aspect of the present invention a sequence number is provided in the IPv6 diagram. This provides the advantage that in case packages are delivered that form a control flow or a sequence of configuration data this flow can be rearranged to retrieve the originally intended order.

According to an aspect of the present invention to each of the words at least two technical moods are assigned and hence, the appearing word in the empirical data source contribute to at least two technical moods. This provides the advantage that any number of mood can be applied to the suggested method. Consequently, specific words may for instance comprise 8 or 14 moods, wherein the number of technical moods can always be the same for each word or different cardinalities of technical moods can be assigned. For instance, a first word may be assigned two moods and five moods may be assigned to a second word. In case the respective parameter is required for computation and a specific mood is not present the parameter can be filled with 0. In this way a vector can be established comprising several instances of one and zero indicating the presence or absence of a technical mood regarding this specific word.

According to a further aspect of the present invention for each appearing word an appearance counter of the assigned technical mood is incremented. This provides the advantage that for each word the technical mood is extracted and consequently, the overall mood is increased due to the specific word. Generally, a word may contribute to several moods which are all incremented at the appearance of this specific word. Hence, the maximum appearance counter of a specific mood equals the appearance of the respective word in the empirical data source.

According to a further aspect of the present invention an absolute number of highest counted indicators or a relative number of highest counted indicators relative to a size of the empirical data source is arranged in the circular diagram. This provides the advantage that not all words need to be represented in the respective diagram but only a comprehensive number of indicators is presented, which may likewise be dependent on the screen size and screen resolution serving as output device. In general, the indicators may reflect the respective moods of the empirical data source or at least a subset thereof. For instance, the empirical data source may be divided into articles, such as websites. Then the indicators may be computed for the empirical data source as such or at least a specific number of websites or even a single website. In this was the overall mood can be reflected of the empirical data source or at least a part thereof.

According to an aspect of the present invention the position of the indicators is calculated by at least one of a radius, theta θ, and/ or a circumference. This provides the advantage that different measures can be computer based on the number of appearing word and respective moods. Hence, different semantics can be indicated in the circular diagram and all dimensions can be used for data representation.

According to a further aspect of the present invention various degrees of intensity are illustrated by the radius of the diagram. This provides the advantage that the distance to the center of the circular diagram indicates either a weak or strong influence of that technical mood. In this way the full range of the circular diagram is used.

According to a further aspect of the present invention reflecting the technical mood is performed by breaking down the circular diagram into layers comprising segments, wherein each segment is identified by a color and a label indicating the technical mood. This provides the advantage that the circular diagram has several dimensions and regions. First of all layers may be generated which are distinguished by a different radius. Moreover, such layers may be divided into sections. The layers may not be disjoint such that overlap segments may be present. Using the circumference the segments can be adapted in their size.

According to a further aspect of the present invention reflecting the technical mood is performed by assigning each indicator to a segment. This provides the advantage that each segment may indicate a mood and whenever such a mood is presented by the data source the indicator is places in this specific segment. The position within the segment holds further semantics and is defined for instance by parameters such as a radius or an angle.

According to a further aspect of the present invention each indicator reflects the frequency count of the glossary word occurrences by its size. This provides the advantage that the indicators can be plotted bigger in case of several occurrences and can be plotted smaller in case the respective mood is less important. In this way a comprehensive data representation is provided which uses the limited screen to its full advantage.

According to a further aspect of the present invention several glossaries are combined using a communication infrastructure thereby creating the glossary of words. This provides the advantage that several glossaries can be joint together using interfaces and moreover, specific fields of terminology can be covered. Different suppliers of glossaries can be used and an overall glossary can be formed using all of the provided information sources.

According to a further aspect of the present invention percentages and occurrences per layer, circular variance and standard deviation, variance and standard deviation of radius and/ or mean resultant lengths, respectively length, are used to indicate which layer of the circular diagram is most and least intense in terms of technical moods. This provides the advantage that several measures are defined and consequently, the circular diagram can be populated very meaningful. In this way the semantics of the data source are reflected in a sufficient way despite of the large amounts of data.

According to a further aspect of the present invention a middle of the circular diagram represents an apathetic, converging collective technical mood. This provides the advantage that additional semantics are applied even to the center of the circular diagram. In this way the diagram can be understood comprehensively at a first glance.

The object is also solved by a system arrangement for automated and hardware efficient representation of big data stets, comprising at least one communication interface arranged to provide a glossary of words in at least one data storage, wherein to each of the words contained in the glossary a technical mood is assigned, and formulating a query containing at least a selection of the words in the glossary; an analysis component arranged to provide an empirical data source, in which a number of appearing words out of the query is counted; and an output unit arranged to arrange a set of indicators in a circular diagram, the indicators reflecting the technical mood by their position and size of appearance in the circular diagram.

Accordingly a computer implemented method for extracting machine readable multi-dimensional parameter sets is suggested, comprising the steps of storing a set of named object entities and assigning respectively one vector of technical values to each of the object entities; reading out a heterogeneous data source over a distributed communication network and identifying the named object entities therein; calculating a count the occurrences of each of the named object entities in the heterogeneous data source and weighting the vector of technical values in accordance with the calculated count per object entity; arranging the weighted vector in a multidimensional data space; and addressing the arranged vector using a machine device for further processing and for initializing control commands.

The object is also solved by a system arrangement for extracting machine readable multi-dimensional parameter sets, comprising a data storage device arranged to store a set of named object entities and assign respectively one vector of technical values to each of the object entities; a communication interface arranged to read out a heterogeneous data source over a distributed communication network and identify the named object entities therein; a computation device arranged to calculate a count the occurrences of each of the named object entities in the heterogeneous data source and weight the vector of technical values in accordance with the calculated count per object entity; an interface device arranged to store the number of appearance of the words in a header of an IPv6 datagram; and a sending device arranged to transmit the IPv6 datagram to a machine device for its configuration based on header information. The machine device is optionally configured in accordance with the submitted number of occurrence.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly the method teaches steps which are arranged to operate the suggested device. Furthermore, the device comprises structural features allowing the accomplishment of the suggested method. In addition a computer program and a computer program product respectively is suggested comprising instruction which perform the suggested method when executed on a computer or the device according to the present invention. Furthermore, the instructions provide means for implementing the structural features of the claimed device. Accordingly an operable image of the structural features of the device can be created. Likewise an arrangement comprising the structural device features is provided.

Wherever, structural features are provided they can likewise be established virtually thereby creating a virtual instance of physical structures. For instance a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
- Figure 1:: a flowchart of a computer implemented method for automated and hardware efficient representation of big data stets according to an aspect of the present invention; and
- Figure 2:: a IPv6 datagram holding both signaling data and payload data according to an aspect of the present invention.

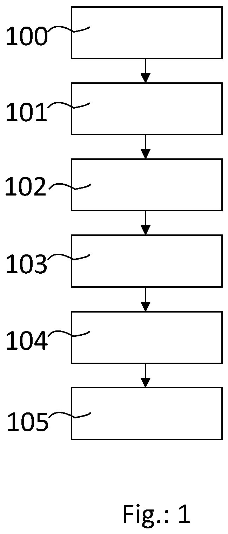

Figure 1 shows a method for automated and hardware efficient representation of big data stets comprising the steps of providing 100 a glossary of words in at least one data storage, wherein to each of the words contained in the glossary a technical mood is assigned, and formulating 101 a query containing at least a selection of the words in the glossary; providing 102 an empirical data source, in which a number of appearing words out of the query is counted 103; and storing 104 the number of appearance of the words in a header of an IPv6 datagram; and transmitting 105 the IPv6 datagram to a machine device for its configuration based on header information.

The user is able to select a time interval indicating from which to which date the heterogeneous data source is to be considered. Typically documents or information items in general have a time stamp and hence the data basis can be restricted using these intervals.

The person skilled in the art will appreciate that individual method steps can be carried out iteratively and/ or in a different order.

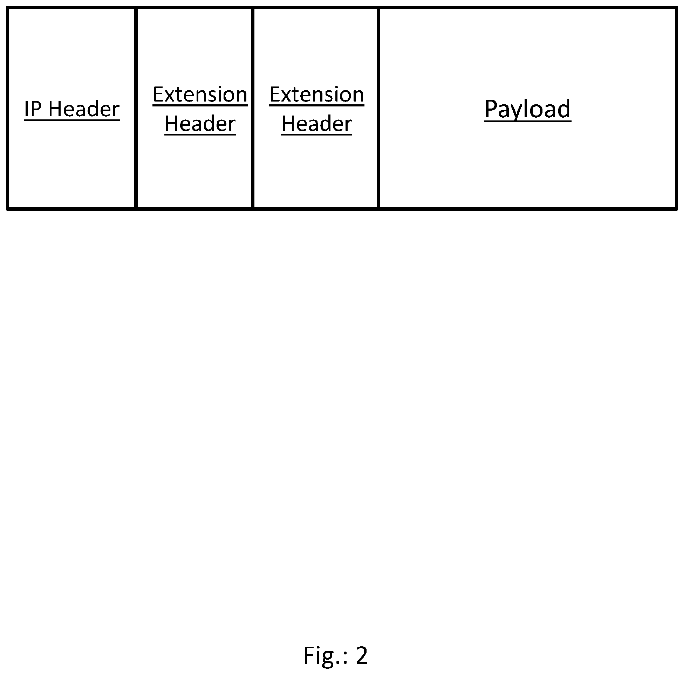

Figure 2 shows the general procedure in which the vector is created, weighted and stored in a header. The weighted vector can be stored in the address block or the extension headers of an IPv6 datagram. Both the sender and the receiver shall agree on the underlying format in order to be able to interpret the provided data.

## Claims

1. A method for automated and hardware efficient representation of big data sets, comprising:
- providing (100), by means of at least one communication interface, a glossary of words in at least one data storage, wherein to each of the words contained in the glossary a technical parameter is assigned, and formulating (101) a query containing at least a selection of the words in the glossary;
- providing (102), by means of an analysis component, an empirical data source, in which a number of appearing words out of the query is counted (103); and
- storing (104), by means of an interface unit, the number of appearance of the words in a header of an IPv6 datagram; and
- transmitting (105), by means of a sending unit, the IPv6 datagram to a machine device for its configuration based on header information.

2. The method according to claim 1, **characterized in that** the number of appearance is stored in an extension header or at least one address block of the datagram.

3. The method according to claims 1 or 2, **characterized in that** the number of appearance provides configuration parameters for the machine device.

4. The method according to any one of the preceding claims, **characterized in that** a database is provided indicating further processing information about the number of appearance.

5. The method according to any one of the preceding claims, **characterized in that** a sequence number is provided in the IPv6 datagram.

6. The method according to any one of the preceding claims, **characterized in that** an absolute number of highest counted number of appearance or a relative number of highest counted number of appearance relative to a size of the empirical data source is stored.

7. The method according to any one of the preceding claims, **characterized in that** each number of appearance reflects the frequency count of the glossary word occurrences by its size.

8. The method according to any one of the preceding claims, **characterized in that** several glossaries are combined using a communication infrastructure thereby creating the glossary of words.

9. System arrangement for automated and hardware efficient representation of big data sets, comprising:
- at least one communication interface arranged to provide (100) a glossary of words in at least one data storage, wherein to each of the words contained in the glossary a technical parameter is assigned, and formulating (101) a query containing at least a selection of the words in the glossary;
- an analysis component arranged to provide (102) an empirical data source, in which a number of appearing words out of the query is counted (103); and
- an interface unit arranged to store (104) the number of appearance of the words in a header of an IPv6 datagram; and
- a sending unit arranged to transmit (105) the IPv6 datagram to a machine device for its configuration based on header information.

10. A computer program product comprising instructions to cause the arrangement of claim 9 to execute the steps of the method of any one of claims 1 to 8.

11. A computer-readable medium having stored thereon the computer program of claim 10.

## Patentansprüche

1. Verfahren zur automatisierten und hardwareeffizienten Darstellung von großen Datenmengen , umfassend:
- Bereitstellen (100), mittels mindestens einer Kommunikationsschnittstelle, eines Glossars von Wörtern in mindestens einem Datenspeicher, wobei jedem der im Glossar enthaltenen Wörter ein technischer Parameter zugeordnet ist, und Formulieren (101) einer Abfrage, die mindestens eine Auswahl der Wörter im Glossar enthält;
- Bereitstellen (102), mittels einer Analysekomponente, einer empirischen Datenquelle, in der eine Anzahl von auftretenden Wörtern aus der Abfrage gezählt wird (103); und
- Speichern (104), mittels einer Schnittstelleneinheit, der Anzahl des Auftretens der Wörter in einem Header eines IPv6-Datagramms; und
- Übertragen (105) des IPv6-Datagramms mittels einer Sendeeinheit an ein Maschinengerät zu dessen Konfiguration auf der Grundlage der Header-Information.

2. Verfahren nach Anspruch 1, **dadurch gekennzeichnet, dass** die Anzahl der Auftritte in einem Erweiterungsheader oder in mindestens einem Adressblock des Datagramms gespeichert wird.

3. Verfahren nach Anspruch 1 oder 2, **dadurch gekennzeichnet, dass** die Anzahl der Erscheinungsbilder Konfigurationsparameter für das Maschinengerät bereitstellt.

4. Verfahren nach einem der vorhergehenden Ansprüche, **dadurch gekennzeichnet, dass** eine Datenbank bereitgestellt wird, die Informationen zur Weiterverarbeitung der Erscheinungszahl angibt.

5. Verfahren nach einem der vorangehenden Ansprüche, **dadurch gekennzeichnet, dass** eine Sequenznummer im IPv6-Datagramm bereitgestellt wird.

6. Verfahren nach einem der vorangehenden Ansprüche, **dadurch gekennzeichnet, dass** eine absolute Zahl der höchsten gezählten Anzahl des Auftretens oder eine relative Zahl der höchsten gezählten Anzahl des Auftretens relativ zu einer Größe der empirischen Datenquelle gespeichert wird.

7. Verfahren nach einem der vorhergehenden Ansprüche, **dadurch gekennzeichnet, dass** jede Anzahl des Auftretens die Häufigkeitszählung des Vorkommens des Wortes im Glossar in Abhängigkeit von seiner Größe wiedergibt.

8. Verfahren nach einem der vorhergehenden Ansprüche, **dadurch gekennzeichnet, dass** mehrere Glossare unter Verwendung einer Kommunikationsinfrastruktur zusammengeführt werden und so das Glossar der Wörter erstellt wird.

9. Systemanordnung zur automatisierten und hardwareeffizienten Darstellung großer Datenmengen, umfassend:
- mindestens eine Kommunikationsschnittstelle, die eingerichtet ist, ein Glossar von Wörtern in mindestens einem Datenspeicher bereitzustellen (100), wobei jedem der im Glossar enthaltenen Wörter ein technischer Parameter zugeordnet ist, und eine Abfrage zu formulieren (101), die mindestens eine Auswahl der Wörter im Glossar enthält;
- eine Analysekomponente, die so eingerichtet ist, dass sie eine empirische Datenquelle bereitstellt (102), in der eine Anzahl von auftretenden Wörtern aus der Abfrage gezählt wird (103); und
- eine Schnittstelleneinheit zum Speichern (104) der Anzahl des Auftretens der Wörter in einem Header eines IPv6-Datagramms; und
- eine Sendeeinheit, die so angeordnet ist, dass sie das IPv6-Datagramm an eine Maschinenvorrichtung für deren Konfiguration auf der Grundlage von Header-Informationen überträgt (105).

10. Computerprogrammprodukt, das Anweisungen enthält, um die Anordnung nach Anspruch 9 zu veranlassen, die Schritte des Verfahrens nach einem der Ansprüche 1 bis 8 auszuführen.

11. Computerlesbares Medium, auf dem das Computerprogramm nach Anspruch 10 gespeichert ist.

## Revendications

1. Méthode pour la représentation automatisée et efficace en termes de matériel d'ensembles de données volumineux , comprenant :
- fournir (100), au moyen d'au moins une interface de communication, un glossaire de mots dans au moins un stockage de données, dans lequel un paramètre technique est attribué à chacun des mots contenus dans le glossaire, et formuler (101) une requête contenant au moins une sélection des mots du glossaire ;
- fournir (102), au moyen d'un composant d'analyse, une source de données empiriques dans laquelle le nombre de mots apparaissant dans la requête est compté (103) ; et
- stocker (104), au moyen d'une unité d'interface, le nombre d'apparition des mots dans l'en-tête d'un datagramme IPv6 ; et
- transmettre (105), au moyen d'une unité d'envoi, le datagramme IPv6 à une machine pour sa configuration sur la base des informations d'en-tête.

2. Méthode selon la revendication 1, **caractérisée par le fait que** le nombre d'apparences est stocké dans un en-tête d'extension ou dans au moins un bloc d'adresses du datagramme.

3. Méthode selon la revendication 1 ou 2, **caractérisée par le fait que** le nombre d'apparence fournit des paramètres de configuration pour le dispositif de la machine.

4. Procédé selon l'une des revendications précédentes, **caractérisé par le fait qu'**une base de données est fournie pour indiquer des informations de traitement ultérieur sur le nombre d'apparences.

5. Méthode selon l'une des revendications précédentes, **caractérisée par le fait qu'**un numéro de séquence est fourni dans le datagramme IPv6.

6. Méthode selon l'une des revendications précédentes, **caractérisée par le fait qu'**un nombre absolu du plus grand nombre d'apparitions comptées ou un nombre relatif du plus grand nombre d'apparitions comptées par rapport à la taille de la source de données empiriques est stocké.

7. Méthode selon l'une des revendications précédentes, **caractérisée par le fait que** chaque nombre d'apparition reflète la fréquence des occurrences des mots du glossaire en fonction de leur taille.

8. Méthode selon l'une quelconque des revendications précédentes, **caractérisée par le fait que** plusieurs glossaires sont combinés à l'aide d'une infrastructure de communication, créant ainsi le glossaire de mots.

9. Arrangement de système pour la représentation automatisée et efficace en termes de matériel d'ensembles de données volumineux, comprenant :
- au moins une interface de communication conçue pour fournir (100) un glossaire de mots dans au moins un stockage de données, dans lequel un paramètre technique est attribué à chacun des mots contenus dans le glossaire, et pour formuler (101) une requête contenant au moins une sélection de mots dans le glossaire ;
- un composant d'analyse conçu pour fournir (102) une source de données empiriques, dans laquelle le nombre de mots apparaissant dans la requête est compté (103) ; et
- une unité d'interface conçue pour stocker (104) le nombre d'occurrences des mots dans l'en-tête d'un datagramme IPv6 ; et
- une unité d'envoi conçue pour transmettre (105) le datagramme IPv6 à un appareil pour sa configuration sur la base des informations de l'en-tête.

10. Produit de programme informatique comprenant des instructions permettant à l'arrangement de la revendication 9 d'exécuter les étapes de la méthode de l'une des revendications 1 à 8.

11. Support lisible par ordinateur sur lequel est stocké le programme informatique de la revendication 10.
